# EUROPEAN PATENT SPECIFICATION

(11) **EP 3 764 772 B1**
(45) Date of publication and mention of the grant of the patent: **19.01.2022**
(21) Application number: 19707318.2
(22) Date of filing: 18.02.2019
(51) Int. Cl.: A01G 20/43, A01D 43/063

(54) **MATERIAL COLLECTING EQUIPMENT HAVING COLLECTION BASKET RELEASABLY SECURED TO HANDLE VIA HOOK MEMBER**
MATERIALSAMMELVORRICHTUNG MIT EINEM MITTELS EINES HAKENELEMENTS AM GRIFF LÖSBAR BEFESTIGTEN SAMMELKORB
ÉQUIPEMENT DE COLLECTE DE MATÉRIAU COMPORTANT UN PANIER DE COLLECTE FIXÉ DE MANIÈRE LIBÉRABLE À UNE POIGNÉE PAR LE BIAIS D'UN ÉLÉMENT CROCHET

(30) Priority: 16.03.2018 DE 102018002144
(43) Date of publication of application: 20.01.2021
(73) Proprietor: HUSQVARNA AB, 561 82 Huskvarna (SE)
(72) Inventor: DEMMELMAIER, Tobias, 89312 Günzburg (DE); KOHL, Peter, 89257 Illertissen (DE); MISSEL, Patrick, 89198 Westerstetten (DE)
(74) Representative: Finkele, Rolf
(86) International application number: PCT/EP2019/054001
(87) International publication number: WO 2019/174864

(56) References cited:
- US-A- 1 684 744
- US-A- 2 910 818
- US-A- 3 928 956

## Description

### TECHNICAL FIELD

The present disclosure relates to a material collecting equipment, and more particularly to a material collecting equipment having a collection basket that is releasably secured to a handle with a hook member.

### BACKGROUND

Hand-held material collecting equipment including, but not limited to, gardening equipment such as lawn movers and leaf collecting devices have been well known in the art. The hand-held material collecting equipment typically includes a material collecting portion, a storage compartment in communication with the material collecting portion, and a handle connected to the material collecting portion and/or the storage compartment. The handle facilitates a user in handling the material collecting equipment when the storage compartment is either attached to or detached from the material collecting portion of the material collecting device.

However, in many cases, it has been observed that for attaching or detaching the storage compartment from the handle, for example, when the storage compartment has to be emptied of its contents, conventional designs of the storage compartment, the handle and/or connection mechanisms therebetween may hinder the user from easily and quickly securing the storage compartment to the handle. This renders the storage compartment, the handle and/or connection mechanisms of unergonomic design that makes it difficult for the user to operate the material collecting equipment, especially, in attaching and detaching the storage compartment from the handle.

An example is provided by U.S. patent 3,928, 956 disclosing a grass catcher for use with a lawn mower housing having a rear discharge opening provided with a hinged safety flap. The grass catcher includes a fabric bag having a peripheral frame at the front, open end and a hanger at the rear end. The peripheral frame cooperates with the mower housing to hold the safety flap in the up, open position when the grass catcher is installed, and the frame is formed into a handle to facilitate installation and removal of the catcher.

As well U.S. patent 1,684,744 discloses a grass catcher for use with a lawn mower housing that is disposed under the lawn mowers handle and having a pair of side walls disposed about a mid-plane of the collection basket. Thereby the grass catcher also incorporates a cross member transverse to the mid-plane and extending between the pair of sides between its fore portion and its end portion opposite the fore portion. This end portion has a hook-type holder pivotably attached to it that allows the grass catcher to be hang onto the lawn mowers handle.

Hence, there is a need for a material collecting equipment that employs an improved configuration of a handle and a storage compartment therein such that the aforementioned drawbacks, typically experienced by conventional designs of storage compartments and handles attached thereto, can be overcome to facilitate ergonomic use of the handle and the storage compartment by a user, especially, in attaching or detaching the storage compartment from the handle.

### SUMMARY

In view of the above, it is an objective of the present invention to solve or at least reduce the drawbacks discussed above. The objective is at least partially achieved by a material collecting equipment that, according to an embodiment of the present invention, may be embodied in the form of a leaf collecting device, or according to another embodiment of the present invention, may be embodied as a lawn mower.

The material collecting equipment according to the invention includes an implement compartment having a work implement disposed therein and having a receiving portion.

The material collecting equipment further includes a handle having a first end coupled to a top surface of the implement compartment and a second end located distally away from the first end. The material collecting equipment also includes a collection basket that is disposed below the handle. The collection basket has a pair of side walls that are disposed sidewardly at a distance to the mid-plane of the collection basket. The collection basket also has a cross-member transverse to the mid-plane and extending between the pair of side walls. The collection basket has a fore portion engaging with the receiving portion, the cross member is located on the collection basket between the fore portion and an end of the collection basket opposite to the fore portion, one of the handle and the cross-member is provided with a hook member extending therefrom such that the hook member is adapted to releasably engage other one of the cross-member and the handle, wherein the collection basket is releasably secured to the handle via the hook member. The hook member allows a user in easily and quickly securing the collection basket to the handle, or alternatively, in detaching the collection basket from the handle.

According to an embodiment of the present invention, the hook member extends downwardly from the handle and is located between the first and second ends of the handle. In this embodiment, the hook member has a concave portion facing the second end of the handle such that when a fore portion of the collection basket is engaged with a receiving portion of the implement compartment, the cross-member of the collection basket engages with the concave portion of the hook member to releasably secure the collection basket to the handle.

According to a further embodiment of the present invention, the cross-member may be disposed in sliding engagement with the side walls of the collection basket such that the cross-member may be moveable at least partway along the mid-plane of the basket for one of: engaging with and disengaging from the concave portion of the hook member. In accordance with the further embodiment, the cross-member may be moveable in a first direction towards the first end of the handle to engage with the concave portion of the hook member. Also, the cross-member may be moveable in a second direction towards the second end of the handle to disengage from the concave portion of the hook member.

According to an embodiment of the present invention, the hook member may be integrally formed with the handle. According to another embodiment of the present invention, the hook member may be formed separately with respect to the handle and affixed to the handle. This provides ease in manufacturing the hook member and assembling the hook member onto the handle.

According to an alternative embodiment of the present invention, the hook member extends upwardly from the cross-member and is located proximal to the mid-plane of the collection basket. In accordance with the alternative embodiment, the hook member has a concave portion transverse to the mid-plane of the basket and is configured to extend at least partway about a circumference of the handle.

According to an embodiment of the present invention, the hook member may be integrally formed with the cross-member. According to another embodiment of the present invention, the hook member may be formed separately with respect to the cross-member and affixed to the cross-member. This provides ease in manufacturing the hook member and assembling the hook member onto the cross-member of the collection basket.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a front perspective view of a material collecting equipment having an implement compartment, a collection basket, a handle, and a hook member that is associated with the handle, in accordance with the present invention;
**FIG. 2** shows a side perspective view of the material collecting equipment from **FIG. 1** showing the hook member depending downwardly from the handle and engaged with a cross-member of the collection basket;
**FIG. 3** shows a side sectional view of the material collecting equipment taken along a cross-sectional plane **AA'** of **FIG. 2****;**
**FIG. 4** shows a front perspective view of a material collecting equipment having a hook member associated with the cross-member of the collection basket, in accordance with an embodiment of the present invention; and
**FIG. 5** shows a front perspective view of the collection basket from **FIG. 4** showing the hook member extending upwardly from the cross-member of the collection basket.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as being limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

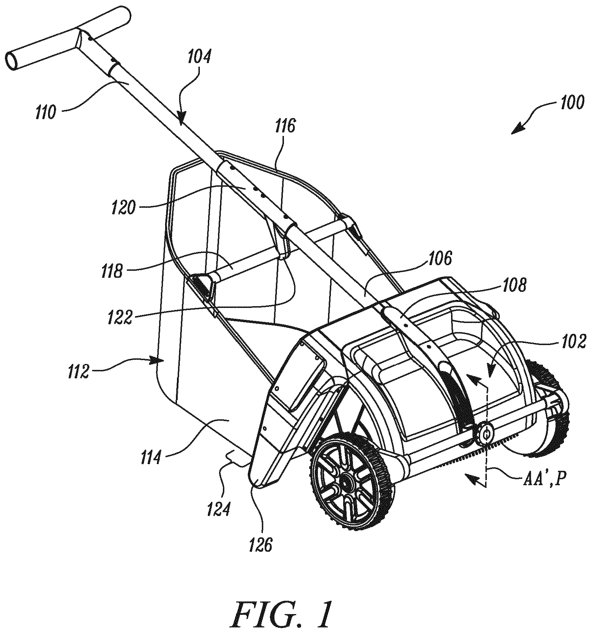

**FIG. 1** shows a side perspective view of a material collecting equipment **100,** according to an embodiment of the present invention. In an embodiment as shown in **FIG. 1****,** the material collecting equipment **100** is a leaf collecting device. However, in other embodiments of the present invention, the material collecting equipment **100** may include a lawn mower, or other types of gardening equipment known to persons skilled in the art.

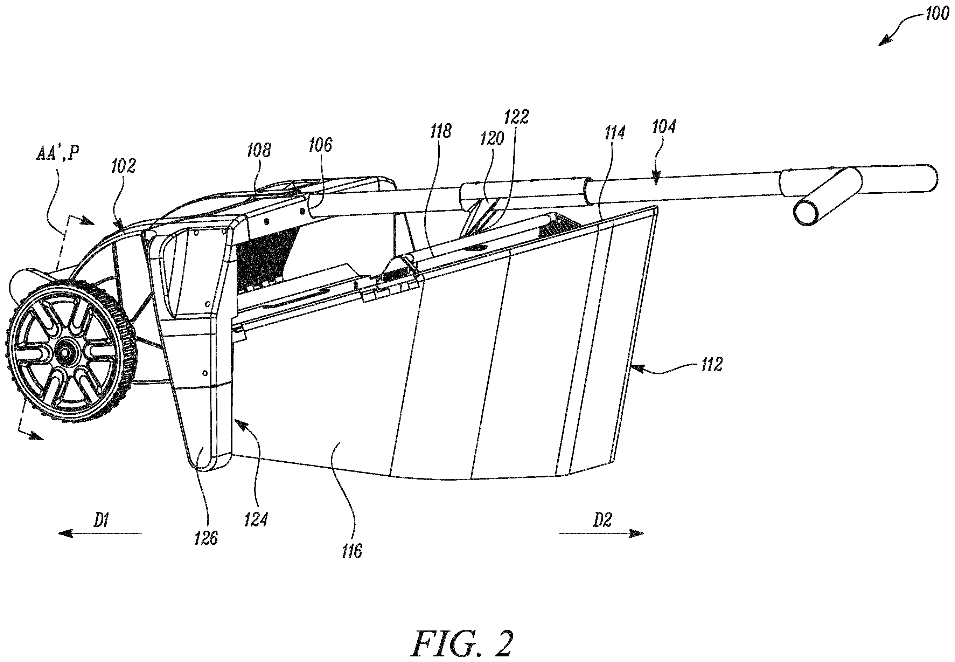

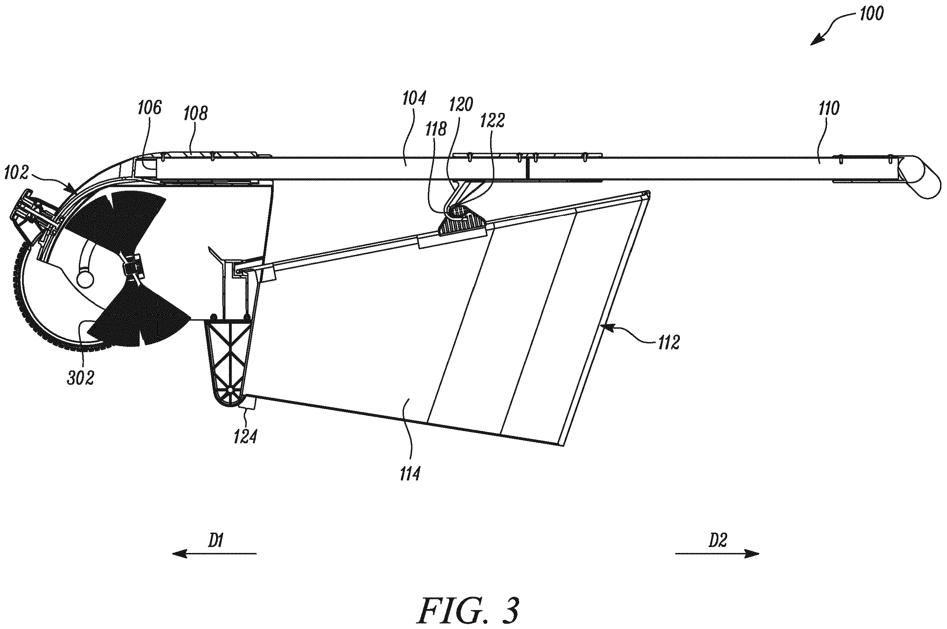

With reference to **FIGs. 1** and **2****,** the material collecting equipment **100** has an implement compartment **102.** The implement compartment **102** has a work implement **302** disposed therein, as best shown in the view of **FIG. 3****.** The work implement **302** may embody any tool depending on specific requirements of an application associated with the material collecting device. For example, if the material collecting equipment **100** is a leaf collecting device used in a leaf collecting application, the work implement **302** may accordingly be embodied as a scooping or collecting tool. In another example, if the material collecting equipment **100** is a lawn mower, the work implement **302** may accordingly be embodied as a cutting tool having one or more cutting edges (not shown).

Referring to **FIGs. 1-3****,** the material collecting equipment **100** further includes a handle **104** having a first end **106** coupled to a surface **108** (here, the top surface) of the implement compartment **102.** The handle **104** may be secured to the top surface **108** of the implement compartment **102** using a fastening arrangement (not shown), for example, a bolt and nut connection, or alternatively, using an interference fit as shown best in the view of **FIG. 3****.** Also, as shown best in the view of **FIG. 1****,** the handle **104** further includes a second end **110** that is located distally away from the first end **106.**

Furthermore, the material collecting equipment **100** also includes a collection basket **112** that is disposed below the handle **104.** The collection basket **112** is in communication with the implement compartment **102** to receive and collect material from the implement compartment **102.** As shown best in the view of **FIG. 1****,** the collection basket **112** has a pair of side walls **114, 116** that are disposed about a mid-plane **P** of the collection basket **112.** The collection basket **112** also has a cross-member **118** that extends between the pair of side walls **114, 116** and is transverse to the mid-plane **P** of the collection basket **112.**

In the present invention, the material collecting equipment **100** is characterized in that one of the handle **104** and the cross-member **118** is provided with a hook member **120** such that the collection basket **112** is releasably secured to the handle **104** via the hook member **120.** In the particular embodiment of **FIGs. 1** through **3****,** the hook member **120** extends downwardly from the handle **104** and is located between the first and second ends **106, 110** of the handle **104.** In a further embodiment, the hook member **120** has a concave portion **122** facing the second end **110** of the handle **104** such that when a fore portion **124** of the collection basket **112** is engaged with a receiving portion **126** of the implement compartment **102,** the cross-member **118** of the collection basket **112** engages with the concave portion **122** of the hook member **120** to releasably secure the collection basket **112** to the handle **104.**

As such, in a further embodiment, the cross-member **118** may be disposed in sliding engagement with the side walls **114, 116** of the collection basket **112** such that the cross-member **118** may be moveable at least partway along the mid-plane **P** of the basket **112** for one of: engaging with and disengaging from the concave portion **122** of the hook member **120.** Thus, the cross-member **118** may be moveable in a first direction **D1** *i.e.,* towards the first end **106** of the handle **104** for engaging with the concave portion **122** of the hook member **120** so that the collection basket **112** can be secured to the handle **104** of the material collecting equipment **100.** Additionally, the cross-member **118** may also be moveable in a second direction **D2** *i.e.,* towards the second end **110** of the handle **104** for disengaging from the concave portion **122** of the hook member **120** so that the collection basket **112** can be detached from the handle **104.** Therefore, the configurations of the hook member **120** and the cross-member **118** disclosed herein allow a user of the material collecting equipment **100** to easily and quickly - secure the collection basket **112** to the handle **104,** or alternatively, detach the collection basket **112** from the handle **104.**

In a further embodiment, the hook member **120** may be integrally formed with the handle **104.** Alternatively, the hook member **120** may be formed separately with respect to the handle **104** and affixed to the handle **104.** This provides ease in manufacturing the hook member **120** and assembling the hook member **120** onto the handle **104.**

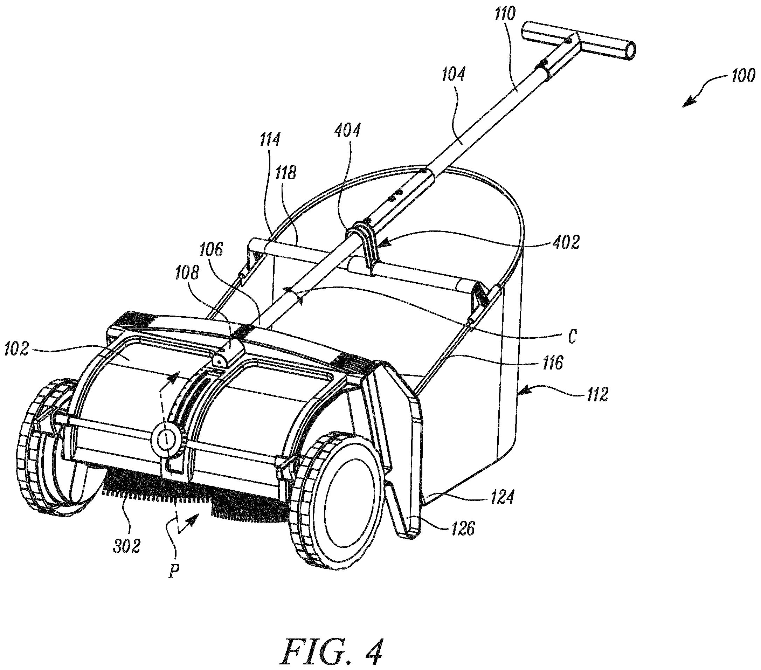

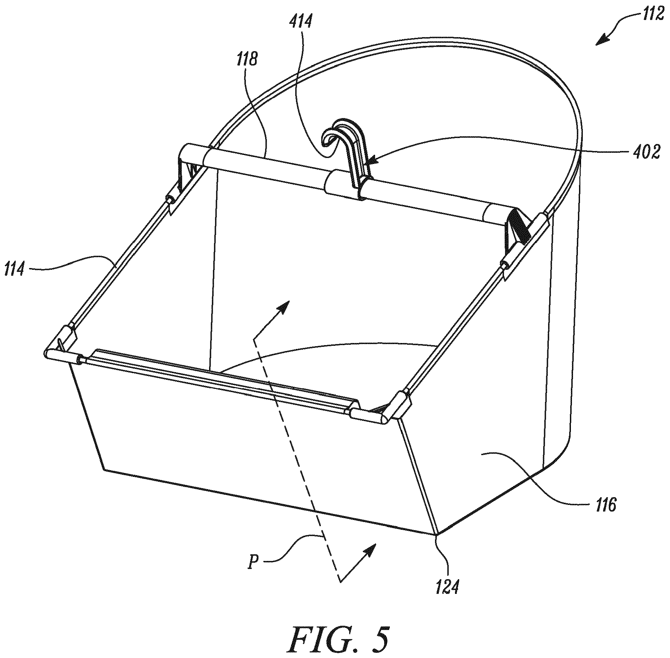

Referring to an alternative embodiment shown in **FIGs. 4** and **5****,** the hook member **402** extends upwardly from the cross-member **118** and is located proximal to the mid-plane **P** of the collection basket **112.** In accordance with this embodiment, the hook member **402** has a concave portion **404** transverse to the mid-plane **P** of the collection basket **112** and is configured to extend at least partway about a circumference C of the handle **104.**

In an embodiment, the hook member **120** may be integrally formed with the cross-member **118.** Alternatively, the hook member **120** may be formed separately with respect to the cross-member **118** and affixed to the cross-member **118.** This provides ease in manufacturing the hook member **120** and assembling the hook member **120** onto the cross-member **118** of the collection basket **112.**

According to an embodiment, each of the handle **104,** the cross-member **118,** and the hook member **120** may be made of a metal, for example, Steel (Fe), Aluminum (Al), a suitable alloy, or a thermoplastic material depending on specific requirements of an application.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Material collecting equipment
- **102**: Implement compartment
- **104**: Handle
- **106**: First end of handle
- **108**: Surface of implement compartment
- **110**: Second end of handle
- **112**: collection basket
- **114, 116**: pair of side walls
- **118**: cross-member
- **120**: hook member
- **122**: concave portion of hook member
- **124**: fore portion of collection basket
- **126**: receiving portion of implement compartment
- **302**: Work implement
- **402**: Hook member
- **404**: concave portion
- **D1**: first direction
- **D2**: second direction
- **C**: circumference of the handle
- **AA'**: Sectional plane
- **P**: mid-plane

## Claims

1. A material collecting equipment **(100)** comprising:
an implement compartment **(102)** having a work implement **(302)** disposed therein and having a receiving portion (126);
a handle **(104)** having a first end **(106)** coupled to a top surface **(108)** of the implement compartment **(102)** and a second end **(110)** located distally away from the first end **(106);** and
a collection basket **(112)** disposed below the handle **(104),** the collection basket **(112)** having a pair of side walls **(114, 116)** disposed sidewardly at a distance to the mid-plane **(P)** of the collection basket **(112),** the collection basket **(112)** having a cross-member **(118)** transverse to the mid-plane **(P)** and extending between the pair of side walls **(114, 116),**
wherein the collection basket (112) has a fore portion **(124)** engaging with the receiving portion **(126);**
the cross-member (118) is located on the collection basket (112) between the fore portion (124) and an end of the collection basket (112) opposite to the fore portion (124);
**characterized in that**:
one of the handle **(104)** and the cross-member **(118)** is provided with a hook member **(120)** extending therefrom such that the hook member (120) is adapted to releasably engage other one of the cross-member (118) and the handle (104),
wherein the collection basket **(112)** is releasably secured to the handle **(104)** via the hook member **(120).**

2. The material collecting equipment (100) according to claim 1, **characterized in that**, the hook member (120) extends downwardly from the handle (104) and is located between the first and second ends (106), 110) of the handle (104).

3. The material collecting equipment (100) according to claim 2, **characterized in that**, the hook member (120) has a
concave portion **(122)** facing the second end **(110)** of the handle **(104)** such that when a fore portion **(124)** of the collection basket **(112)** is engaged with a receiving portion **(126)** of the implement compartment **(102),** the cross-member **(118)** of the collection basket **(112)** engages with the concave portion **(122)** of the hook member **(120)** to releasably secure the collection basket **(112)** to the handle **(104).**

4. The material collecting equipment **(100)** according to claim 3, **characterized in that**, the cross-member **(118)** is disposed in sliding engagement with the side walls **(114, 116)** of the collection basket **(112)** such that the cross-member **(118)** is moveable at least partway along the mid-plane **(P)** of the basket **(112)** for one of: engaging with and disengaging from the concave portion **(122)** of the hook member **(120).**

5. The material collecting equipment **(100)** according to claim 4, **characterized in that**, the cross-member **(118)** is moveable in a first direction **(D1)** towards the first end **(106)** of the handle **(104)** to engage with the concave portion **(122)** of the hook member **(120).**

6. The material collecting equipment **(100)** according to claim 4, **characterized in that**, the cross-member **(118)** is moveable in a second direction **(D2)** towards the second end **(110)** of the handle **(104)** to disengage from the concave portion **(122)** of the hook member **(120).**

7. The material collecting equipment **(100)** according to any of the preceding claims, **characterized in that**, the hook member **(120)** is integrally formed with the handle **(104).**

8. The material collecting equipment **(100)** according to any of the preceding claims, **characterized in that**, the hook member **(120)** is formed separately with respect to the handle **(104)** and affixed to the handle **(104)** .

9. The material collecting equipment **(100)** according to claim 1, **characterized in that**, the hook member **(120)** extends upwardly from the cross-member **(118)** and is located proximal to the mid-plane **(P)** of the collection basket **(112).**

10. The material collecting equipment **(100)** according to claim 9, **characterized in that**, the hook member **(402)** has a concave portion **(404)** transverse to the mid-plane **(P)** of the basket **(112)** and configured to extend at least partway about a circumference **(C)** of the handle **(104).**

11. The material collecting equipment **(100)** according to claim 9, **characterized in that**, the hook member **(402)** is integrally formed with the cross-member **(118).**

12. The material collecting equipment **(100)** according to claim 9, **characterized in that**, the hook member **(402)** is formed separately with respect to the cross-member **(118)** and affixed to the cross-member **(118).**

13. The material collecting equipment **(100)** according to any of the preceding claims, **characterized in that**, the material collecting equipment **(100)** is one of a leaf collecting device and a lawn mower.

## Patentansprüche

1. Materialsammelgerät **(100),** umfassend: ein Gerätefach (102) mit einem darin angeordneten Arbeitsgerät (302) und mit einem Aufnahmeabschnitt **(126);**
einen Griff **(104)** mit einem ersten Ende **(106),** das mit einer oberen Fläche **(108)** des Gerätefachs **(102)** verbunden ist, und einem zweiten Ende **(110),** das sich distal vom ersten Ende **(106)** entfernt befindet; und
einen unterhalb des Griffs **(104)** angeordneten Sammelkorb **(112),** wobei der Sammelkorb **(112)** ein Paar von Seitenwänden **(114, 116)** aufweist, die seitlich in einem Abstand zur Mittelebene **(P)** des Sammelkorbs **(112)** angeordnet sind, wobei der Sammelkorb **(112)** eine Traverse **(118)** quer zur Mittelebene **(P)** aufweist und sich zwischen dem Paar von Seitenwänden **(114, 116)** erstreckt,
wobei der Sammelkorb **(112)** einen vorderen Abschnitt **(124)** aufweist, der mit dem Aufnahmeabschnitt **(126)** in Eingriff steht;
die Traverse **(118)** an dem Sammelkorb **(112)** zwischen dem vorderen Abschnitt **(124)** und einem Ende des Sammelkorbs **(112)** gegenüber dem vorderen Abschnitt **(124)** angeordnet ist;
**dadurch gekennzeichnet, dass**:
entweder der Griff **(104)** oder die Traverse **(118)** mit einem sich davon erstreckenden Hakenelement **(120)** versehen ist, so dass das Hakenelement **(120)** angepasst ist, um lösbar mit einer anderen der Traversen **(118)** und dem Griff **(104)** in Eingriff zu treten,
wobei der Sammelkorb **(112)** lösbar an dem Griff **(104)** über das Hakenelement **(120)** befestigt ist.

2. Materialsammelgerät **(100)** nach Anspruch 1, **dadurch gekennzeichnet, dass** sich das Hakenelement **(120)** vom Griff **(104)** nach unten erstreckt und sich zwischen dem ersten und dem zweiten Ende **(106, 110)** des Griffs **(104)** befindet.

3. Materialsammelgerät **(100)** nach einem der vorhergehenden Ansprüche, **dadurch gekennzeichnet, dass** das Hakenelement **(120)** einen konkaven Abschnitt **(122)** aufweist, der dem zweiten Ende **(110)** des Griffs **(104)** zugewandt ist, so dass wenn ein vorderer Abschnitt **(124)** des Sammelkorbs **(112)** mit einem Aufnahmeabschnitt **(126)** des Gerätefachs **(102)** in Eingriff ist, die Traverse **(118)** des Sammelkorbs **(112)** mit dem konkaven Abschnitt **(122)** des Hakenelements **(120)** in Eingriff steht, um den Sammelkorb **(112)** lösbar an dem Griff **(104)** zu befestigen.

4. Materialsammelgerät **(100)** nach Anspruch 3, **dadurch gekennzeichnet, dass** die Traverse **(118)** in Gleiteingriff mit den Seitenwänden **(114, 116)** des Sammelkorbs **(112)** angeordnet ist, so dass die Traverse **(118)** zumindest teilweise entlang der Mittelebene **(P)** des Korbs **(112)** bewegbar ist, um eines von: in Eingriff mit dem konkaven Abschnitt **(122)** des Hakenelementes **(120)** zu treten und sich davon zu lösen.

5. Materialsammelgerät **(100)** nach Anspruch 4, **dadurch gekennzeichnet, dass** die Traverse **(118)** in einer ersten Richtung **(D1)** in Richtung des ersten Endes **(106)** des Griffs **(104)** bewegbar ist, um mit dem konkaven Abschnitt **(122)** des Hakenelements **(120)** in Eingriff zu treten.

6. Materialsammelgerät **(100)** nach Anspruch 4, **dadurch gekennzeichnet, dass** die Traverse **(118)** in einer zweiten Richtung **(D2)** in Richtung des zweiten Endes **(110)** des Griffs **(104)** bewegbar ist, um sich von dem konkaven Abschnitt **(122)** des Hakenelements **(120)** zu lösen.

7. Materialsammelgerät **(100)** nach einem der vorhergehenden Ansprüche, **dadurch gekennzeichnet, dass** das Hakenelement **(120)** einstückig mit dem Griff **(104)** ausgebildet ist.

8. Materialsammelgerät **(100)** nach einem der vorhergehenden Ansprüche, **dadurch gekennzeichnet, dass** das Hakenelement **(120)** in Bezug auf den Griff **(104)** separat ausgebildet und an dem Griff **(104)** befestigt ist.

9. Materialsammelgerät **(100)** nach Anspruch 1, **dadurch gekennzeichnet, dass** sich das Hakenelement **(120)** von der Traverse **(118)** nach oben erstreckt und sich proximal der Mittelebene **(P)** des Sammelkorbs **(112)** befindet.

10. Materialsammelgerät **(100)** nach Anspruch 9, **dadurch gekennzeichnet, dass** das Hakenelement **(402)** einen konkaven Abschnitt **(404)** quer zur Mittelebene **(P)** des Korbs **(112)** aufweist und so gestaltet ist, dass er sich zumindest teilweise um einen Umfang **(C)** des Griffs **(104)** erstreckt.

11. Materialsammelgerät **(100)** nach Anspruch 9, **dadurch gekennzeichnet, dass** das Hakenelement **(402)** einstückig mit der Traverse **(118)** ausgebildet ist.

12. Materialsammelgerät **(100)** nach Anspruch 9, **dadurch gekennzeichnet, dass** das Hakenelement **(402)** in Bezug auf die Traverse **(118)** separat ausgebildet und an der Traverse (118) befestigt ist.

13. **Materialsammelgerät (100)** nach einem der vorhergehenden Ansprüche, **dadurch gekennzeichnet, dass** das Materialsammelgerät **(100)** eine Laubsammeivorrichtung oder ein Rasenmäher ist.

## Revendications

1. Équipement de collecte de matière **(100)** comprenant :
un compartiment d'outil **(102)** ayant un outil de travail **(302)** disposé en son sein et ayant une partie de réception (126) ;
une poignée **(104)** ayant une première extrémité **(106)** couplée à une surface de dessus **(108)** du compartiment d'outil **(102)** et une seconde extrémité **(110)** éloignée de manière distale de la première extrémité **(106)** ; et
un panier de collecte **(112)** disposé au-dessous de la poignée **(104),** le panier de collecte **(112)** ayant une paire de parois latérales **(114, 116)** disposées de chaque côté à une certaine distance du plan médian **(P)** du panier de collecte **(112),** le panier de collecte **(112)** ayant une traverse **(118)** transversale au plan médian **(P)** et s'étendant entre la paire de parois latérales **(114, 116),**
dans lequel le panier de collecte (112) possède une partie frontale **(124)** en prise avec la partie de réception **(126)** ;
la traverse (118) est située sur le panier de collecte (112) entre la partie frontale (124) et
une extrémité du panier de collecte (112) opposée à la partie frontale (124) ;
**caractérisé en ce que** :
l'une parmi la poignée **(104)** et la traverse **(118)** est munie d'un organe de type crochet **(120)** s'étendant à partir de celle-ci de sorte que l'organe de type crochet (120) soit conçu pour venir en prise de manière libérable avec l'autre parmi la traverse (118) et la poignée (104) ,
dans lequel le panier de collecte **(112)** est fixé de manière libérable à la poignée **(104)** via l'organe de type crochet **(120).**

2. Équipement de collecte de matière (100) selon la revendication 1, **caractérisé en ce que** l'organe de type crochet (120) s'étend vers le bas à partir de la poignée (104) et est situé entre les première et seconde extrémités (106, 110) de la poignée (104).

3. Équipement de collecte de matière (100) selon la revendication 2, **caractérisé en ce que** l'organe de type crochet (120) possède une partie concave **(122)** faisant face à la seconde extrémité **(110)** de la poignée **(104)** de sorte que lorsqu'une partie frontale **(124)** du panier de collecte **(112)** est en prise avec une partie de réception **(126)** du compartiment d'outil **(102),** la traverse **(118)** du panier de collecte **(112)** vient en prise avec la partie concave **(122)** de l'organe de type crochet **(120)** pour fixer de manière libérable le panier de collecte **(112)** à la poignée **(104).**

4. Équipement de collecte de matière **(100)** selon la revendication 3, **caractérisé en ce que** la traverse **(118)** est disposée en prise coulissante avec les parois latérales **(114, 116)** du panier de collecte **(112)** de sorte que la traverse **(118)** soit mobile au moins en partie le long du plan médian **(P)** du panier **(112)** pour l'un parmi : venir en prise avec, et se désolidariser de, la partie concave **(122)** de l'organe de type crochet **(120).**

5. Équipement de collecte de matière **(100)** selon la revendication 4, **caractérisé en ce que** la traverse **(118)** est mobile dans une première direction **(D1)** vers la première extrémité **(106)** de la poignée **(104)** pour venir en prise avec la partie concave **(122)** de l'organe de type crochet **(120).**

6. Équipement de collecte de matière **(100)** selon la revendication 4, **caractérisé en ce que** la traverse **(118)** est mobile dans une seconde direction **(D2)** vers la seconde extrémité **(110)** de la poignée **(104)** pour se désolidariser de la partie concave **(122)** de l'organe de type crochet **(120).**

7. Équipement de collecte de matière **(100)** selon l'une quelconque des revendications précédentes, **caractérisé en ce que** l'organe de type crochet **(120)** est formé d'un seul tenant avec la poignée **(104).**

8. Équipement de collecte de matière **(100)** selon l'une quelconque des revendications précédentes, **caractérisé en ce que** l'organe de type crochet **(120)** est formé séparément par rapport à la poignée **(104)** et apposé sur la poignée **(104).**

9. Équipement de collecte de matière **(100)** selon la revendication 1, **caractérisé en ce que** l'organe de type crochet **(120)** s'étend vers le haut à partir de la traverse **(118)** et est situé à proximité du plan médian **(P)** du panier de collecte **(112).**

10. Équipement de collecte de matière **(100)** selon la revendication 9, **caractérisé en ce que** l'organe de type crochet **(402)** possède une partie concave **(404)** transversale au plan médian **(P)** du panier **(112)** et configurée pour s'étendre au moins en partie autour d'une circonférence **(C)** de la poignée **(104).**

11. Équipement de collecte de matière **(100)** selon la revendication 9, **caractérisé en ce que** l'organe de type crochet **(402)** est formé d'un seul tenant avec la traverse **(118).**

12. Équipement de collecte de matière **(100)** selon la revendication 9, **caractérisé en ce que** l'organe de type crochet **(402)** est formé séparément par rapport à la traverse **(118)** et apposé sur la traverse **(118).**

13. Équipement de collecte de matière **(100)** selon l'une quelconque des revendications précédentes, **caractérisé en ce que** l'équipement de collecte de matière **(100)** est l'un parmi un dispositif de ramassage de feuilles et une tondeuse à gazon.
